# EUROPÄISCHE PATENTANMELDUNG

(11) **EP 3 643 954 A1**
(43) Veröffentlichungstag der Anmeldung: **29.04.2020**
(21) Anmeldenummer: 19200797.9
(22) Anmeldetag: 01.10.2019
(51) Int. Cl.: F16K 31/06

(54) **ELEKTROMAGNETISCHES VENTIL, VERFAHREN ZUM BETRIEB EINES ELEKTROMAGNETISCHEN VENTILS**

(30) Priorität: 25.10.2018 DE 102018008410
(71) Anmelder: Andreas Stihl AG & Co. KG, 71336 Waiblingen (DE)
(72) Erfinder: Geyer, Klaus, 71560 Sulzbach (DE); Ramler, Jens, 71522 Backnang (DE)
(74) Vertreter: Wasmuth, Rolf

(57) **Zusammenfassung**

Elektromagnetisches Ventil und ein Verfahren zum Betrieb des Ventils. Das elektromagnetische Ventil umfasst ein Ventilgehäuse (2), einen Magnetkern (3) und eine mit dem Magnetkern (3) zusammenwirkende metallische Ankerplatte (4). Die Ankerplatte (4) betätigt einen Ventilkörper (5). Das elektromagnetische Ventil (1) besitzt eine erste Hubstellung (6) mit einem ersten Abstand (a) zwischen der Ankerplatte (4) und dem Magnetkern (3) und eine zweite Hubstellung (7) mit einem zweiten Abstand (b) zwischen der Ankerplatte (4) und dem Magnetkern (3). Der erste Abstand (a) ist in der ersten Hubstellung (6) größer als der zweite Abstand (b) in der zweiten Hubstellung (7). Der Durchfluss des elektromagnetischen Ventils (1) ist in einer der beiden Hubstellungen (6, 7) geöffnet und in der anderen Hubstellung (6, 7) gesperrt. Die Ankerplatte (4) weist einen Hubweg (c) von der ersten Hubstellung (6) zur zweiten Hubstellung (7) auf. Das elektromagnetische Ventil (1) umfasst ein erstes Federelement (9) und ein zweites Federelement (10), wobei das erste Federelement (9) auf die Ankerplatte (4) über den gesamten Hubweg (c) wirkt. Das zweite Federelement (10) wirkt ab einer Zwischenposition (8) der Ankerplatte (4), welche zwischen der ersten Hubstellung (6) und der zweiten Hubstellung (7) liegt, bis zur zweiten Hubstellung (7) zusätzlich zum ersten Federelement (9) auf die Ankerplatte (4).

## Beschreibung

Die Erfindung betrifft ein elektromagnetisches Ventil der im Oberbegriff des Anspruchs 1 angegebenen Gattung sowie ein Verfahren zum Betrieb eines solchen elektromagnetischen Ventils.

Aus der DE 100 16 599 A1 ist ein elektromagnetisches Ventil bekannt. Das elektromagnetische Ventil umfasst einen Magnetkern, einen Magnetanker sowie zwei Federelemente. Der Magnetanker ist über die Federelemente gegen den Magnetkern vorgespannt. Durch die Bestromung der um den Magnetkern verlaufenden Spule wird der Magnetanker vom Magnetkern angezogen, wodurch sich das Ventil öffnet. Ist die Spule nicht bestromt, wird der Magnetkern über die Federelemente zurück in dessen Ausgangslage gedrückt, wodurch das elektromagnetische Ventil geschlossen wird. Beide Federelemente wirken gleichzeitig über den gesamten Hubweg des Magnetankers von der offenen in die geschlossene Stellung des elektromagnetischen Ventils parallel auf den Magnetanker. Dabei bilden die Federelemente einen progressiven Kennlinienverlauf.

Die Federkraft der beiden Federelemente ist derart ausgelegt, dass diese in etwa im Gleichgewicht mit der Magnetkraft des Magnetankers steht, um ein proportionales Steuern des Ventilhubes zu ermöglichen. Da die Federkraft in etwa der Magnetkraft entspricht, sind die Schaltzeiten derartiger Ventile vergleichsweise hoch. Ein schnelles Öffnen bzw. Schließen des elektromagnetischen Ventils ist nicht möglich.

Der Erfindung liegt die Aufgabe zugrunde, ein elektromagnetisches Ventil der gattungsgemäßen Art zu schaffen, das geringe Schaltzeiten ermöglicht.

Diese Aufgabe wird durch ein elektromagnetisches Ventil mit den Merkmalen des Anspruchs 1 gelöst.

Des Weiteren liegt der Erfindung die Aufgabe zugrunde, ein Verfahren zum Betrieb eines elektromagnetischen Ventils anzugeben, welches geringe Schaltzeiten des elektromagnetischen Ventils ermöglicht.

Diese Aufgabe wird durch ein Verfahren zum Betrieb eines elektromagnetischen Ventils mit den Merkmalen des Anspruchs 13 gelöst.

Das elektromagnetische Ventil mit einem Ventilgehäuse umfasst mindestens ein erstes Federelement und mindestens ein zweites Federelement. Lediglich das erste Federelement wirkt auf die Ankerplatte über den gesamten Hubweg. Das zweite Federelement wirkt erst ab einer Zwischenposition der Ankerplatte, wobei die Zwischenposition zwischen der ersten Hubstellung und der zweiten Hubstellung liegt. Das zweite Federelement wirkt ab der Zwischenposition bis zur zweiten Hubstellung zusätzlich zum ersten Federelement auf die Ankerplatte. Das zweite Federelement wirkt demnach von der Zwischenstellung bis zur zweiten Hubstellung zusätzlich zum ersten Federelement. In anderen Worten wird das zweite Federelement verstärkend zum ersten Federelement nur über einen Hubweg geschaltet, der kleiner als der gesamte Hubweg ist.

Das erfindungsgemäße elektromagnetische Ventil reduziert vorteilhaft die Schaltzeiten. Die auf die Ankerplatte wirkende Magnetkraft weist einen ausgehend von der ersten Hubstellung hin bis zur zweiten Hubstellung progressiv ansteigenden Kennlinienverlauf auf. Ist die Ankerplatte in der ersten Hubstellung und soll unter Bestromung des elektromagnetischen Ventils in die zweite Hubstellung bewegt werden, so ist die Federkraft vergleichsweise gering zu wählen. Die ohnehin niedrige Magnetkraft in der ersten Hubstellung beschleunigt die Ankerplatte mit Ventilkörper und bewegt diese auf möglichst schnelle Weise in Richtung auf die zweite Hubstellung.

Ist die Ankerplatte in der zweiten Hubstellung und soll in die erste Hubstellung in unbestromtem Zustand des elektromagnetischen Ventils bewegt werden, so ist eine möglichst große Federkraft zu wählen, um eine schnelle Rückstellung in die Ausgangslage der Ankerplatte zu ermöglichen. Zudem begünstigen große Federkräfte in der zweiten Hubstellung ein Überwinden von magnetischen oder adhäsiven Kräften, die ein Kleben der Ankerplatte an den Magnetkern verursachen können.

Basierend auf den obigen Erkenntnissen wurde ein elektromagnetisches Ventil geschaffen, das ein zweites Federelement umfasst, welches in Abhängigkeit des Hubweges der Ankerplatte zusätzlich zum ersten Federelement wirkt. So wirkt in der ersten Hubstellung lediglich das erste Federelement auf die Ankerplatte, wodurch sich eine vergleichsweise geringe Federkraft einstellt. Demnach ist die in der ersten Hubstellung vergleichsweise geringe Magnetkraft dennoch deutlich größer als die wirkende Federkraft, wodurch die Federkraft einfach überwunden und eine schnelle Bewegung der Ankerplatte in Richtung der zweiten Hubstellung ermöglicht werden kann.

Erst nach einem Hubweg in die Zwischenstellung wird das zweite Federelement dem ersten Federelement zugeschaltet. In dieser Zwischenstellung ist der Abstand zwischen der Ankerplatte und dem Magnetkern so gering, dass die Magnetkraft ausreichend groß ist, um auch entgegen der Federkraft des zweiten Federelementes eine schnelle Bewegung der Ankerplatte in Richtung der zweiten Hubstellung zu ermöglichen. In der zweiten Hubstellung sind vorzugsweise die beiden Federelemente maximal vorgespannt. Die beiden Federelemente üben vorteilhaft in der zweiten Hubstellung eine vergleichsweise hohe Federkraft auf die Ankerplatte in Richtung der ersten Hubstellung aus. Wird das elektromagnetische Ventil in den unbestromten Zustand geschaltet, bewirkt die vergleichsweise hohe Federkraft eine schnelle Rückstellung in die erste Hubstellung.

Liegt beispielsweise in der zweiten Hubstellung die Ankerplatte an dem Magnetkern und/oder der Spule an, kann eine magnetische oder adhäsive Klebeverbindung vorliegen. Durch die hohen Federkräfte in der zweiten Hubstellung, kann die Ankerplatte auch entgegen der magnetischen oder adhäsiven Kräfte von dem Magnetkern und/oder der Spule gelöst werden. Demnach können mit dem erfindungsgemäßen elektromagnetischen Ventil die gegensätzlichen Anforderungen einer zunächst in der ersten Hubstellung geringen Federkraft und in der zweiten Hubstellung besonders hohen Federkraft durch die hubwegabhängige Schaltung zweier Federelemente erfüllt und die Schaltzeiten dadurch reduziert werden.

Vorteilhaft sind das erste Federelement und das zweite Federelement parallel geschalten. Vorteilhaft ist in dem elektromagnetischen Ventil eine Parallelschaltung der Federelemente ausgebildet. Vorteilhaft ist in dem elektromagnetischen Ventil eine hubwegabhängige Parallelschaltung der mindestens zwei Federelemente ausgebildet.

Das elektromagnetische Ventil ist vorzugsweise in die erste Hubstellung oder in die zweite Hubstellung monostabil schaltbar. Dadurch können insbesondere gegenüber Proportionalventilen aufwendige Regelmechanismen vermieden werden. Zudem können schnellere Schaltzeiten erzielt werden.

In der ersten Hubstellung entspricht ein Eingriffsabstand zwischen dem Ventilkörper und dem zweiten Federelement bevorzugt zwischen 20% bis 80%, vorzugsweise 30% bis 60%, insbesondere 40% des gesamten Hubwegs. In anderen Worten der Eingriffsabstand ist der Abstand zwischen dem Ventilkörper und dem zweiten Federelement in Bezug auf den Gesamthub, wenn das zweite Federelement zusätzlich zum ersten Federelement zu wirken beginnt. Demnach wirkt das zweite Federelement am Anfang des Hubweges nicht, so dass in dem Anfangsbereich des Hubweges eine nur geringe Gesamtfederkraft wirkt. Im Bereich des Hubweges nahe der zweiten Hubstellung ist das zweite Federelement zugeschaltet, so dass ausgehend von der Zwischenstellung bis hin zur zweiten Hubstellung das zweite Federelement ausreichend vorgespannt wird und eine entsprechend hohe Gesamtfederkraft auf die Ankerplatte wirkt.

Vorteilhaft ist das erste Federelement in der ersten Hubstellung vorgespannt. Insbesondere im unbestromten Zustand des elektromagnetischen Ventils kann dadurch eine definierte Stellung der Ankerplatte gewährleistet werden. So wird beispielsweise bei einem stromlos geschlossenen Ventil in der ersten Hubstellung durch die vorgespannte Feder die Ankerplatte gegen den Ventilsitz gedrückt, so dass eine definierte geschlossene Stellung des elektromagnetischen Ventils ermöglicht werden kann.

Das erste Federelement bewirkt vorzugsweise in der zweiten Hubstellung eine größere Federkraft auf die Ankerplatte als in der ersten Hubstellung. Das zweite Federelement bewirkt bevorzugt in der zweiten Hubstellung eine größere Federkraft auf die Ankerplatte als in der Zwischenposition. Sowohl die Federkraft des ersten Federelementes als auch die Federkraft des zweiten Federelementes nehmen in Richtung der zweiten Hubstellung zu, so dass auch die auf die Ankerplatte wirkende Gesamtfederkraft in Richtung der zweiten Hubstellung zunimmt. Das zweite Federelement ist vorzugsweise in der ersten Hubstellung der Ankerplatte entspannt, so dass keine Krafteinwirkung durch das Federelement auf die Ankerplatte wirkt.

Das erste Federelement weist eine erste Federkonstante und das zweite Federelement eine zweite Federkonstante auf. Die zweite Federkonstante ist vorzugsweise höher als die erste Federkonstante. Dadurch kann ein näherungsweise progressiver Kennlinienverlauf der Gesamtfederkraft gebildet werden, der zu einer schnellen Rückstellung der Ankerplatte von der zweiten Hubstellung in die erste Hubstellung führt.

Die erste Federkonstante des ersten Federelementes ist bevorzugt linear. Die zweite Federkonstante des zweiten Federelementes ist vorteilhaft linear. Mit den linearen Federkonstanten nimmt auch bei entsprechendem Federweg der Federelemente die auf die Ankerplatte wirkende Federkraft je Federelement linear zu.

Das zweite Federelement kontaktiert in der Zwischenposition der Ankerplatte vorzugsweise den Ventilkörper. Demnach wird die von dem zweiten Federelement ausgehende Federkraft über den Ventilkörper auf die Ankerplatte übertragen.

Es ist vorteilhaft vorgesehen, dass in bestromtem Zustand des elektromagnetischen Ventils in jeder Stellung der Ankerplatte zum Magnetkern eine auf die Ankerplatte wirkende Gesamtfederkraft des ersten Federelementes und des zweiten Federelementes geringer ist als eine auf die Ankerplatte wirkende Magnetkraft des elektromagnetischen Ventils. Dadurch wird gewährleistet, dass in jeder Hubstellung der Ankerplatte mit Bestromung des elektromagnetischen Ventils die Gesamtfederkraft durch die Magnetkraft überwunden wird und eine Bewegung der Ankerplatte in Richtung der zweiten Hubstellung erfolgt. In bestromtem Zustand des elektromagnetischen Ventils entspricht in jeder Stellung der Ankerplatte zum Magnetkern die Gesamtfederkraft vorzugsweise höchstens 90%, vorteilhaft 65% der Magnetkraft. Dadurch wird aus jeder Hubstellung ein schnelles Schalten des elektromagnetischen Ventils in die zweite Hubstellung ermöglicht.

Ausführungsbeispiele der Erfindung werden im Folgenden anhand der Zeichnungen erläutert. Es zeigen:
- Fig. 1: eine schematische, ausschnittsweise Schnittdarstellung eines stromlos geschlossenen elektromagnetischen Ventils in geschlossener Stellung,
- Fig. 2: eine schematische, ausschnittsweise Schnittdarstellung des elektro-magnetischen Ventils aus Fig. 1 in geöffneter Stellung,
- Fig. 3: eine schematische, ausschnittsweise Schnittdarstellung eines stromlos geöffneten elektromagnetischen Ventils in geöffneter Stellung,
- Fig. 4: eine schematische, ausschnittsweise Schnittdarstellung des elektromagnetischen Ventils aus Fig. 3 in geschlossener Stellung,
- Fig. 5: ein Diagramm eines schematischen Federkennlinienverlaufs des erfindungsgemäßen elektromagnetischen Ventils,
- Fig. 6: eine Schnittdarstellung eines stromlos geschlossenen elektromagnetischen Ventils in geschlossener Stellung,
- Fig. 7: eine schematische Schnittdarstellung des elektromagnetischen Ventils nach Fig. 6 in einer Zwischenstellung,
- Fig. 8: eine Schnittdarstellung des elektromagnetischen Ventils nach Fig. 6 in geschlossener Stellung.

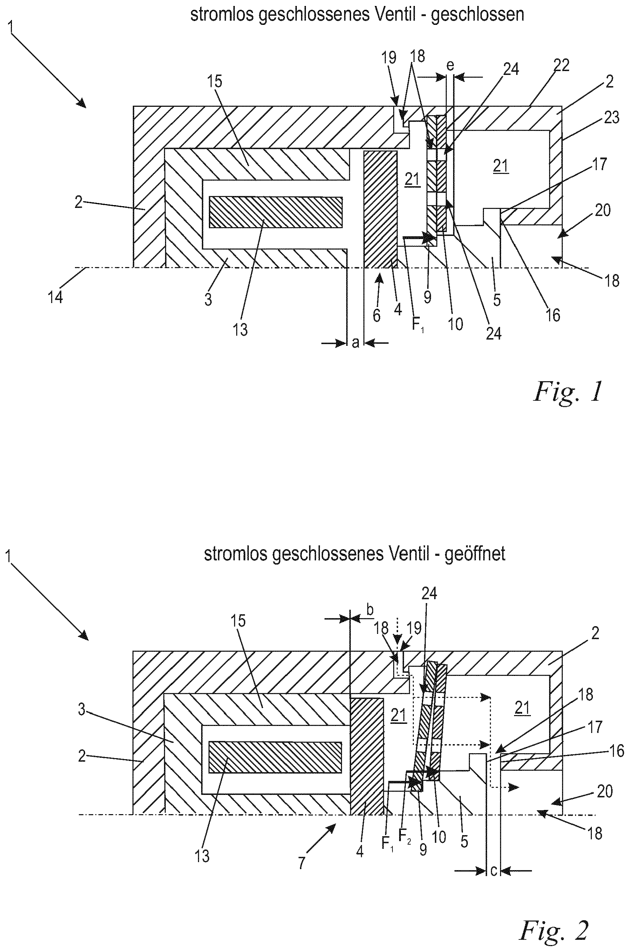

In den Figuren 1 und 2 ist ein erfindungsgemäßes Ausführungsbeispiel eines elektromagnetischen Ventils dargestellt, das als stromlos geschlossenes elektromagnetisches Ventil 1 ausgebildet ist. Zur besseren Übersicht ist lediglich eine Hälfte des elektromagnetischen Ventils 1 gezeigt, welche bis zu einer sich in Blickrichtung der Figuren 1 und 2 erstreckenden Ebene verläuft, wobei die Ebene eine Längsachse 14 des elektromagnetischen Ventils 1 enthält.

Wie in den Figuren 1 und 2 gezeigt, umfasst das elektromagnetische Ventil 1 eine elektrische Antriebsspule 13, in der ein Magnetkern 3 angeordnet ist. Der Magnetkern 3 ist vorzugsweise einteilig mit einem die elektrische Antriebsspule 13 umgebenden Joch 15 ausgebildet. Das Joch 15 ist vorteilhaft topfförmig ausgebildet. Zudem umfasst das elektromagnetische Ventil 1 eine metallische Ankerplatte 4 und einen mit der Ankerplatte 4 vorzugsweise fest verbundenen Ventilkörper 5. Der Magnetkern 3 mit dem Joch 15, die Antriebsspule 13 und die Ankerplatte 4 mit dem Ventilkörper 5 sind vorzugsweise koaxial zur Längsachse 14 des elektromagnetischen Ventils 1 angeordnet und von einem Ventilgehäuse 2 umgeben. Der Magnetkern 3, das Joch 15 sowie die Antriebsspule 13 sind vorzugsweise mit dem Ventilgehäuse fest verbunden. Die Ankerplatte 4 mit dem Ventilkörper 5 sind in Richtung der Längsachse 14 des elektromagnetischen Ventils 1 relativ zu dem Ventilgehäuse 2 bewegbar. Das elektromagnetische Ventil 1 ist über einen nicht dargestellten Anschlussstecker an einen Stromkreis angeschlossen und kann mit Strom versorgt werden. Bei Bestromung der elektrischen Antriebsspule 13 wird in Verbindung mit dem Magnetkern 3 und dem Joch 15 ein Magnetfeld erzeugt, welches eine auf die Ankerplatte 4 wirkende Magnetkraft F_{M} in Richtung von der Ankerplatte 4 zum Magnetkern 3 erzeugt. Durch die Magnetkraft F_{M} wird die Ankerplatte 4 in Richtung zum Magnetkern 3 angezogen. Ist die Antriebsspule 13 unbestromt, wirkt nahezu keine Magnetkraft F_{M} auf die Ankerplatte 4.

Das elektromagnetische Ventil 1 ist monostabil in eine erste Hubstellung 6 (Fig. 1) und in eine zweite Hubstellung 7 (Fig. 2) schaltbar. In der ersten Hubstellung 6 bilden die Ankerplatte 4 und der Magnetkern 3 einen ersten in Richtung der Längsachse 14 gemessenen Abstand a. In der zweiten Hubstellung 7 bilden die Ankerplatte 4 und der Magnetkern 3 einen zweiten in Richtung der Längsachse 14 gemessenen Abstand b. Der erste Abstand a in der ersten Hubstellung 6 ist größer als der zweite Abstand b in der zweiten Hubstellung 7. Die von der Ankerplatte 4 zurückgelegte Strecke von der ersten Hubstellung 6 in die zweite Hubstellung 7 entspricht einem Hubweg c.

Wie in den Fig. 1 und 2 gezeigt, weist das elektromagnetische Ventil 1 eine in etwa konzentrisch zur Längsachse 14 angeordnete Umfangsseite 22 und zwei senkrecht zur Längsachse 14 stehende Stirnseiten 23 auf. Ferner umfasst das elektromagnetische Ventil 1 einen verschließbaren Strömungskanal 18 zum Durchfluss eines Mediums, im Ausführungsbeispiel eines Fluids, welcher durch das elektromagnetische Ventil 1 verläuft.

Im Ausführungsbeispiel besteht der Strömungskanal 18 aus einem Einlasskanal 19 und einem Auslasskanal 20. Der Einlasskanal 19 verläuft von der Umfangsseite 22 in einen Ventilinnenraum 21. Der Auslasskanal 20 verläuft von dem Ventilinnenraum 21 zur Stirnseite 23. Der Ventilinnenraum 21 ist im Wesentlichen durch das Ventilgehäuse 2 begrenzt. Es kann zweckmäßig sein, mehrere Strömungskanäle 18 im elektromagnetischen Ventil 1 vorzusehen, um die Durchflussmenge, beispielsweise die Durchflussmenge der Kraftstoffzufuhr, bedarfsgerecht anzupassen.

Zudem umfasst das elektromagnetische Ventil 1 einen Ventilsitz 16. Der Ventilsitz 16 ist vorteilhaft am Ventilgehäuse 2 ausgebildet, und das elektromagnetische Ventil 1 umfasst vorteilhaft eine am Ventilkörper 5 ausgebildete Dichtfläche 17. Der Ventilsitz 16 des Ventilgehäuses 2 steht mit der Dichtfläche 17 des Ventilkörpers 5 in Wechselwirkung. Im Ausführungsbeispiel nach Fig. 1 sind in der ersten Hubstellung der Ventilsitz 16 und die Dichtfläche 17 des Ventilkörpers 5 in Kontakt und der Strömungskanal 18 geschlossen. Die Strömungsverbindung zwischen dem Ventilinnenraum 21 und dem Auslasskanal 20 ist unterbrochen. Liegt die Dichtfläche 17 hingegen, wie in Fig. 2 gezeigt, nicht an dem Ventilsitz 16 an, ist der Strömungskanal 18 geöffnet. Das elektromagnetische Ventil 1 ist in der zweiten Hubstellung 7. Der Einlasskanal 19 ist mit dem Auslasskanal 20 strömungsverbunden, wodurch das Fluid durch das elektromagnetische Ventil 1 strömen kann. Im Ausführungsbeispiel nach den Figuren 1 und 2 ist der Durchfluss durch den Strömungskanal 18 in der ersten Hubstellung 6 gesperrt und in der zweiten Hubstellung 7 geöffnet.

Wie in den Figuren 1 und 2 gezeigt, umfasst das elektromagnetische Ventil 1 ein erstes Federelement 9 und ein zweites Federelement 10. Vorteilhaft sind das erste Federelement 9 und das zweite Federelement 10 konzentrisch zur Längsachse 14 im Ventilinnenraum 21 angeordnet. Die Federelemente 9, 10 sind im Ausführungsbeispiel als Flachfedern ausgebildet. Es können jedoch auch andere Federarten zweckmäßig sein, beispielsweise Spiralfedern, Tellerfedern oder Formfedern. Ferner weisen die Federelemente 9, 10 vorteilhaft Öffnungen 24 auf. Die Öffnungen 24 ermöglichen ein Strömen des Fluids durch die Federelemente 9, 10. Dadurch wird beim Schließen und Öffnen des elektromagnetischen Ventils 1 ein Verdrängen des Fluids im Ventilinnenraum 21 ermöglicht und eine Strömungsverbindung zwischen dem Einlasskanal 19 und dem Auslasskanal 20 hergestellt.

Im Ausführungsbeispiel besitzen die Federelemente 9, 10 jeweils einen Außenumfang und einen Innenumfang. Die Federelemente 9, 10 sind an ihrem Außenumfang an dem Ventilgehäuse 2 befestigt. Das erste Federelement 9 ist zudem mit seinem Innenumfang an dem Ventilkörper 5 festgelegt. Das erste Federelement 9 wirkt über den Ventilkörper 5 auf die Ankerplatte 4 über den gesamten Hubweg c in Richtung vom Magnetkern 3 zur Ankerplatte 4. Das erste Federelement 9 übt eine erste Federkraft F₁ aus, die in Richtung vom Magnetkern 3 zur Ankerplatte 4 wirkt. Zudem wirkt die erste Federkraft F₁ entgegen der Magnetkraft F_{M}. Ist das elektromagnetische Ventil 1 stromlos, so drückt das erste Federelement 9 den Ventilkörper 5 mit seiner Dichtfläche 17 gegen den Ventilsitz 16 und verschließt den Strömungskanal 18. Um eine ausreichend hohe Schließkraft zwischen der Dichtfläche 17 und dem Ventilsitz 16 zu gewährleisten, ist das erste Federelement 9 im Ausführungsbeispiel in der ersten Hubstellung 6 bereits vorgespannt. Mit Zunahme des Hubes der Ankerplatte 4 nimmt auch der Federweg des ersten Federelementes 9 zu, wodurch sich die erste Federkraft F₁ erhöht. Demnach ist die von dem ersten Federelement 9 ausgeübte erste Federkraft F₁ in der zweiten Hubstellung 7 maximal und in der ersten Hubstellung 6 minimal.

Wie in Fig. 1 gezeigt, weist das zweite Federelement 10 einen in Längsrichtung 14 gemessenen Eingriffsabstand e zum Ventilkörper 5 in Richtung der ersten Hubstellung 6 auf. Der Ventilkörper 5 muss ausgehend von der ersten Hubstellung 6 den Eingriffsabstand e überwinden, bevor der Ventilkörper 5 das zweite Federelement 10 im Bereich des Innenumfangs in einer Zwischenposition 8 kontaktiert. In der Zwischenposition 8 befinden sich die Ankerplatte 4 und der Ventilkörper 5 zwischen der ersten Hubstellung 6 und der zweiten Hubstellung 7. Im Ausführungsbeispiel entspricht in der ersten Hubstellung 6 der Eingriffsabstand e zwischen dem Ventilkörper 5 und dem zweiten Federelement 10 zwischen 20% bis 80%, vorzugsweise 30% bis 60%, insbesondere 40% des gesamten Hubwegs c. Erst ab der Zwischenposition 8 der Ankerplatte 4 ausgehend von der ersten Hubstellung 6 wirkt das zweite Federelement 10 über den Ventilkörper 5 auf die Ankerplatte 4. Demnach wirkt das zweite Federelement 10 lediglich dann auf die Ankerplatte 4, wenn sich die Ankerplatte 4 in einem Bereich zwischen der Zwischenposition 8 und der zweiten Hubstellung 7 befindet. Das zweite Federelement 10 wirkt auf die Ankerplatte 4 in Richtung vom Magnetkern 3 zur Ankerplatte 4. Das zweite Federelement 10 übt eine zweite Federkraft F₂ aus, die in Richtung vom Magnetkern 3 zur Ankerplatte 4 wirkt. Zudem wirkt die zweite Federkraft F₂ entgegen der Magnetkraft F_{M}. Mit Zunahme des Hubes der Ankerplatte 4 ausgehend von der Zwischenposition in Richtung der zweiten Hubstellung 7 nimmt auch der Federweg des zweiten Federelementes 10 zu, wodurch sich die zweite Federkraft F₂ erhöht. Demnach ist die von dem zweiten Federelement 10 auf die Ankerplatte 4 wirkende zweite Federkraft F₂ in der zweiten Hubstellung 7 maximal und in der Zwischenposition 8 minimal.

Das erste Federelement 9 und das zweite Federelement 10 wirken von der Zwischenposition 8 bis zur zweiten Hubstellung 7 parallel auf die Ankerplatte 4. Das erste Federelement 9 und das zweite Federelement 10 sind parallelgeschaltet, wodurch sich eine Gesamtfederkraft F_{G} aus der Summe der ersten Federkraft F₁ und der zweiten Federkraft F₂ ergibt.

Das elektromagnetische Ventil 1 nach den Figuren 1 und 2 steuert den Durchfluss des Fluids nach folgendem Prinzip:
Bei ausgeschaltetem Strom in der elektrischen Antriebsspule 13 ist das elektromagnetische Ventil 1 in der ersten Hubstellung 6 (Fig. 1). Das erste Federelement 9 drückt mit einer ersten Federkraft F₁ den Ventilkörper 5 mit seiner Dichtfläche 17 gegen den Ventilsitz 16 am Ventilgehäuse 2. Der Durchfluss des Fluids vom Ventilinnenraum 21 zum Auslasskanal ist gesperrt. Folglich besteht keine Strömungsverbindung zwischen dem Einlasskanal 19 und dem Auslasskanal 20, wonach der Strömungskanal 18 gesperrt ist. Die mit dem Ventilkörper 5 vorzugsweise fest verbundene Ankerplatte 4 weist in dieser Stellung einen maximalen Abstand a zum Magnetkern 3 auf. Das zweite Federelement 10 weist gegenüber dem Ventilkörper 5 einen Eingriffsabstand e auf und wirkt daher nicht auf die Ankerplatte 4. Die auf den Ventilkörper 5 wirkende Gesamtfederkraft F_{G} entspricht der von dem ersten Federelement ausgeübten, minimalen ersten Federkraft F₁.

Bei eingeschaltetem Strom in der elektrischen Antriebsspule 13 wird eine Magnetkraft F_{M} erzeugt, die auf die Ankerplatte 4 in Richtung von der Ankerplatte 4 zum Magnetkern 3 wirkt. Die auf die Ankerplatte 4 wirkende Magnetkraft F_{M} ist größer als die Gesamtfederkraft F_{G}, wodurch die Ankerplatte 4 mit dem Ventilkörper 5 entgegen der Gesamtfederkraft F_{G} in Richtung zum Magnetkern 3 gezogen wird. Der Ventilsitz 16 wird freigegeben, und der Strömungskanal 18 ist geöffnet. Während die Ankerplatte 4 von der ersten Hubstellung 6 bis zur Zwischenposition 8 gezogen wird, wirkt lediglich das erste Federelement 9 entgegen der Magnetkraft F_{M}. Dadurch ist die Magnetkraft F_{M} deutlich größer als die Gesamtfederkraft F_{G}, wodurch die Ankerplatte 4 schnell in Richtung Magnetkern bewegt werden kann. Hat die Ankerplatte 4 die Zwischenposition 8 erreicht, ist der Eingriffsabstand e überwunden und der Ventilkörper 5 und das zweite Federelement 10 kontaktieren sich. Ab der Zwischenposition 8 wirken das erste Federelement 9 und das zweite Federelement 10 entgegen der Magnetkraft F_{M}. Da in bestromtem Zustand des elektromagnetischen Ventils 1 in jeder Stellung der Ankerplatte 4 zum Magnetkern 3 die auf die Ankerplatte 4 wirkende Gesamtfederkraft F_{G} geringer ist als die auf die Ankerplatte 4 wirkende Magnetkraft F_{M}, wird die Ankerplatte 4 weiter zum Magnetkern 3 bis in die zweite Hubstellung 7 gezogen. Um eine schnelle Bewegung der Ankerplatte 4 in Richtung zum Magnetkern 3 zu ermöglichen, entspricht in bestromtem Zustand des elektromagnetischen Ventils 1 in jeder Stellung der Ankerplatte 4 zum Magnetkern 3 die Gesamtfederkraft F_{G} höchstens 90%, insbesondere 65% der Magnetkraft F_{M}.

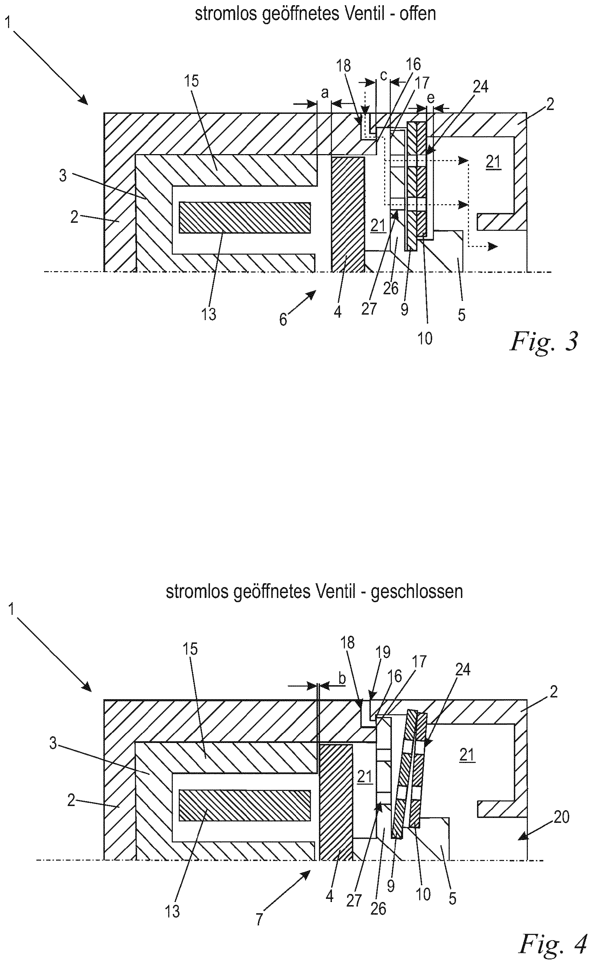

In der zweiten Hubstellung 7 (Fig. 2) liegt die Ankerplatte 4 an dem Ventilgehäuse 2 und/oder an dem Magnetkern 3 an. Dabei hat die Ankerplatte 4 einen minimalen Abstand b zum Magnetkern 3, welcher kleiner ist als der Abstand a in der ersten Hubstellung 6. Das elektromagnetische Ventil 1 ist in dem Ausführungsbeispiel nach Fig. 2 und 3 vollständig geöffnet. Das Fluid strömt von dem Einlasskanal 19 in den Ventilinnenraum 21, durch die Öffnungen 24 der Federelemente 9, 10 an dem Ventilkörper 5 vorbei in den Auslasskanal 20. Der Strömungskanal 18 ist geöffnet.

Wird in der zweiten Hubstellung 7 des elektromagnetischen Ventils 1 die Stromzufuhr abgeschaltet, wird auch die Magnetkraft F_{M} abgeschaltet. Die Gesamtfederkraft F_{G} wirkt auf die Ankerplatte 4 in Richtung zur ersten Hubstellung 6. Da aufgrund der Parallelschaltung der Federelemente 9, 10 die Gesamtfederkraft F_{G} in der zweiten Hubstellung 7 vergleichsweise groß ist, wird die Ankerplatte 4 mit einer hohen Beschleunigung in Richtung zur ersten Hubstellung 6 bewegt. Die hohe Gesamtfederkraft F_{G} überwindet magnetische oder adhäsive Klebekräfte, die zwischen der Ankerplatte 4 und dem Magnetkern 3 bzw. dem Ventilgehäuse 2 auftreten können. Ein schnelles und sicheres Schließen des elektromagnetischen Ventils 1 wird ermöglicht.

In den Figuren 3 und 4 ist ein erfindungsgemäßes Ausführungsbeispiel eines elektromagnetischen Ventils 1 dargestellt, das als stromlos offenes Elektromagnetventil ausgebildet ist. Das Ausführungsbeispiel unterscheidet sich von dem Ausführungsbeispiel nach den Figuren 1 und 2 darin, dass das elektromagnetische Ventil 1 in der ersten Hubstellung 6 (Fig. 3) geöffnet und in der zweiten Hubstellung 7 (Fig. 4) geschlossen ist. Der Ventilsitz 16 ist hierfür im Ausführungsbeispiel am Ventilgehäuse 2 zum Ventilinnenraum 21 hin am Einlasskanal 19 ausgebildet. Die mit dem Ventilsitz 16 in Wechselwirkung stehende Dichtfläche 17 ist im Ausführungsbeispiel an dem Ventilkörper 5 ausgebildet. Vorzugsweise ist der Ventilsitz 16 an einer dem Magnetkern 3 abgewandten Seite des Ventilgehäuses 2 und die Dichtfläche 17 an einer dem Magnetkern 3 zugewandten Seite des Ventilkörpers 5 ausgebildet. Eine derartige Dichtfläche 17 kann wie im Ausführungsbeispiel an einer Schulter 27 des Ventilkörpers 5 ausgebildet sein oder in einem alternativen erfindungsgemäßen Ausführungsbeispiel an der Ankerplatte 4. Zur Strömungsverbindung zwischen Einlasskanal 19 und Auslasskanal 20 sind Öffnungen 27 an der Schulter 26 des Ventilkörpers 5 bzw. an der Ankerplatte 4 notwendig. Zum Schließen des elektromagnetischen Ventils 1 wird die Antriebsspule 13 bestromt, wodurch mittels der Magnetkraft F_{M} die Ankerplatte 4 zum Magnetkern 3 gezogen wird. Die Dichtfläche 17 des Ventilkörpers 5 wird gegen den Ventilsitz 16 am Ventilgehäuse 2 gepresst. Dabei wird der Einlasskanal 19 vom Ventilinnenraum 21 abgesperrt. Der Strömungskanal 18 ist gesperrt. Die Schaltung und Wirkungsweise der Federelemente 9, 10 hinsichtlich der ersten Hubstellung 6, der Zwischenposition 8 und der zweiten Hubstellung 7 des elektromagnetischen Ventils 1 ist mit dem Ausführungsbeispiel nach den Figuren 1 und 2 identisch.

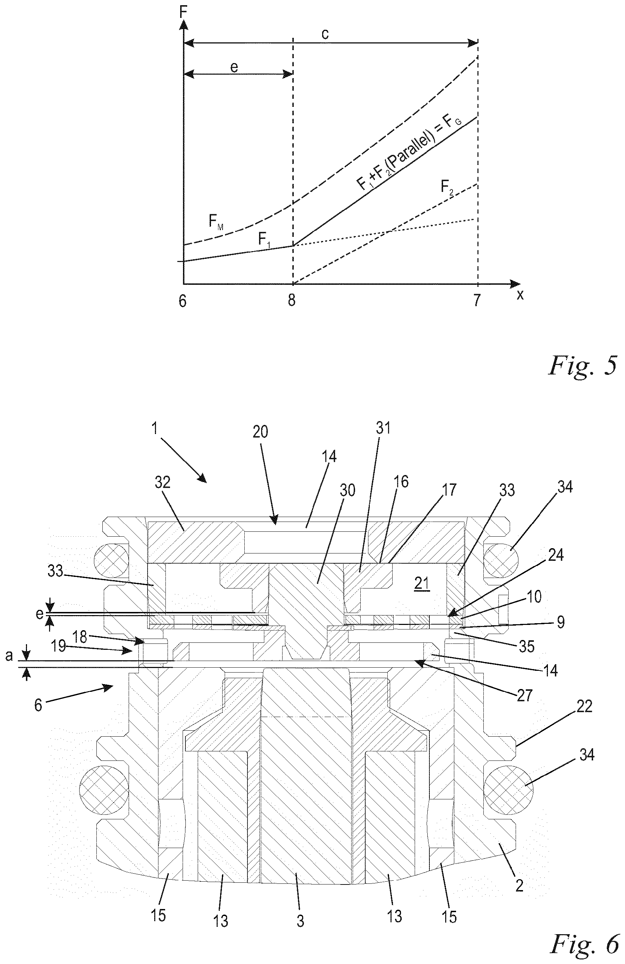

In Fig. 5 ist ein Diagramm dargestellt, das den Federkennlinienverlauf eines erfindungsgemäßen elektromagnetischen Ventils 1 zeigt. Auf der Vertikalachse ist die Federkraft F und auf der Horizontalachse der Federweg x dargestellt. Die Federkraft des ersten Federelementes 9 ist mit F₁ bezeichnet. Die Federkraft des zweiten Federelementes 10 ist mit F₂ bezeichnet. Der Federweg der Federelemente 9, 10 entspricht dem Hubweg der Ankerplatte 4 und des Ventilkörpers 5. In der ersten Hubstellung 6 beginnt der Federweg des ersten Federelementes 9, wobei im Ausführungsbeispiel das erste Federelement 9 vorgespannt ist. Dadurch wirkt eine Mindestfederkraft auf den Ventilkörper 5, welche diesen in einer definierten Anschlagsposition, der ersten Hubstellung 6, hält. Das erste Federelement 9 weist eine über den gesamten Hubweg c lineare erste Federkonstante 11 auf. Nachdem der Ventilkörper 5 den Eingriffsabstand e zwischen der ersten Hubstellung 6 und der Zwischenposition 7 zurückgelegt hat, kontaktiert der Ventilkörper 5 das zweite Federelement 10. Wie im Diagramm in Fig. 5 zu erkennen, ist das zweite Federelement 10 nicht vorgespannt. Daher beträgt die Federkraft F₂ des zweiten Federelementes 10 in der Zwischenposition 8 null. Das zweite Federelement 10 besitzt eine lineare zweite Federkonstante 12. Mit zunehmendem Hubweg ausgehend von der Zwischenposition 8 in Richtung der zweiten Hubstellung 7 erhöht sich neben der ersten Federkraft F₁ des ersten Federelementes 9 auch die zweite Federkraft F₂ des zweiten Federelementes 10. Die zweite Federkonstante 12 des zweiten Federelementes 10 ist im dargestellten Diagramm größer als die erste Federkonstante 11 des ersten Federelementes 9. Wie im Diagramm gezeigt, sind die Federelemente 9, 10 zwischen der Zwischenposition 8 und der zweiten Hubstellung 7 parallelgeschaltet. Dadurch summieren sich die erste Federkraft F₁ und die zweite Federkraft F₂ zu einer auf den Ventilkörper 5 wirkenden Gesamtfederkraft F_{G}, die größer ist als die einzelnen Federkräfte F₁, F₂. In einer alternativen, ebenfalls erfindungsgemäßen Ausführung des elektromagnetischen Ventils 1 können die Federkonstanten 11, 12 der Federelemente 9, 10 auch einen progressiven Kennlinienverlauf aufweisen.

In den Figuren 6, 7 und 8 ist ein weiteres Ausführungsbeispiel des erfindungsgemäßen elektromagnetischen Ventils 1 in verschiedenen Hubstellungen gezeigt, das als stromlos geschlossenes Ventil ausgeführt ist. Das Ausführungsbeispiel entspricht im Wesentlichen dem in den Figuren 1 und 2 gezeigten elektromagnetischen Ventil 1.

Der Ventilkörper 5 ist zweiteilig ausgebildet und umfasst ein Zapfenelement 30 und ein auf das Zapfenelement 30 aufgestecktes Ringelement 31. An dem Ringelement 31 ist die Dichtfläche 17 ausgebildet. Der Ventilsitz 16 ist an einer Bodenplatte 32 ausgebildet, die im Ventilgehäuse 2 montiert ist. Die Bodenplatte 32 weist eine zur Längsachse 14 vorteilhaft konzentrische Öffnung auf, welche den Auslasskanal 20 bildet. Auf der dem Magnetkern zugewandten Seite der Bodenplatte 32 ist der Ventilsitz 16 um die Öffnung der Bodenplatte 32 verlaufend ausgebildet.

Die Federelemente 9, 10 sind an ihren äußeren Enden mittels eines Klemmringes 33 gegen eine Schulter 35 des Ventilgehäuses 2 geklemmt gehalten. Der Klemmring 33 wird über die Bodenplatte 32 gegen das Ventilgehäuse 2 gedrückt. Die Federelemente 9, 10 liegen an ihren äußeren Enden im Ausführungsbeispiel aufeinander, es kann jedoch auch zweckmäßig sein, die Federelemente 9, 10 voneinander beabstandet an dem Ventilgehäuse 2 zu befestigen. Das erste Federelement 9 ist an seinem inneren Umfang zwischen dem Zapfenelement 30 und der Ankerplatte 4 geklemmt befestigt. Somit wirkt das erste Federelement 9 in jeder Hubstellung auf die Ankerplatte 4. Das zweite Federelement 10 hingegen ist an seinem inneren Umfang in Längsrichtung 14 zwischen dem ersten Federelement 9 und dem Ventilkörper 5, hier dem Ringelement 31, angeordnet. Dabei weist das zweite Federelement 10 zum Ventilkörper 5 einen in Längsrichtung 14 gemessenen Eingriffsabstand e auf. Ferner umfasst das elektromagnetische Ventil 1 zwei an der Umfangsseite 22 des Ventilgehäuses 2 angeordnete Dichtelemente 34, die im Ausführungsbeispiel als O-Ringe ausgebildet sind.

In Fig. 6 ist das elektromagnetische Ventil 1 in der ersten Hubstellung 6 gezeigt, in welcher der Strömungskanal 18 geschlossen und der Durchfluss des Fluids gesperrt ist.

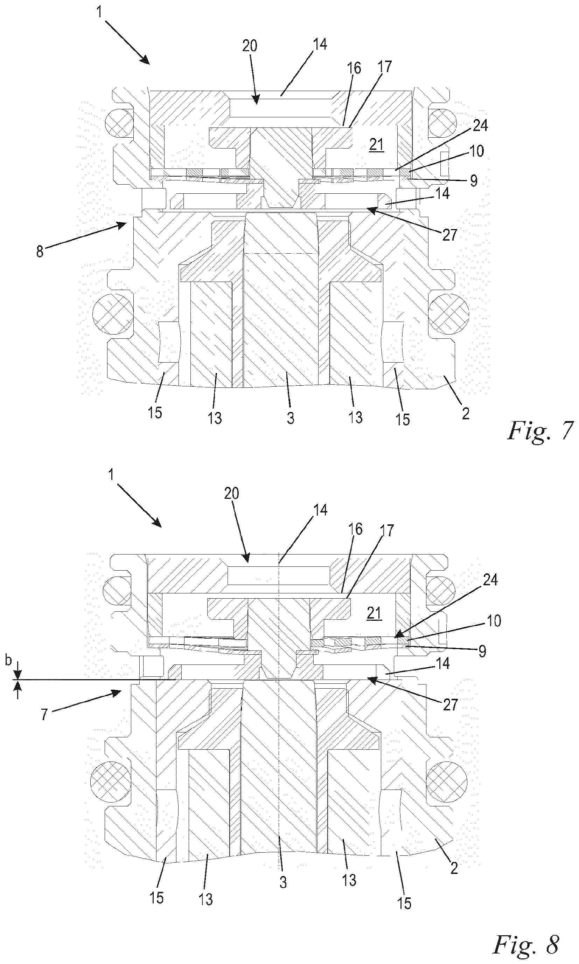

In Fig. 7 ist das elektromagnetische Ventil 1 in der Zwischenposition 8 gezeigt, in welcher das Ventil bereits geöffnet ist und der Ventilkörper 5 den Eingriffsabstand e überwunden hat. Der Ventilkörper 5 kontaktiert das zweite Federelement 10, welches ab der Zwischenposition 8 zusätzlich, vorteilhaft parallel, zum ersten Federelement 9 auf die Ankerplatte 4 wirkt. In der Fig. 8 ist das elektromagnetische Ventil 1 in der zweiten Hubstellung 7 gezeigt, in welcher der Strömungskanal 18 vollständig geöffnet ist. Die erfindungsgemäßen Funktionsprinzipien des Ausführungsbeispiels nach den Figuren 1 und 2 sind auf das Ausführungsbeispiel der Figuren 6, 7 und 8 zu übertragen.

Weitere vorteilhafte Ausführungsbeispiele ergeben sich durch beliebige Kombination der Merkmale der vorgenannten Ausführungsbeispiele.

## Patentansprüche

1. Elektromagnetisches Ventil mit einem Ventilgehäuse (2), mit einem Magnetkern (3) und eine mit dem Magnetkern (3) zusammenwirkende metallische Ankerplatte (4), wobei die Ankerplatte (4) einen Ventilkörper (5) betätigt, wobei das elektromagnetische Ventil (1) eine erste Hubstellung (6) mit einem ersten Abstand (a) zwischen der Ankerplatte (4) und dem Magnetkern (3) und eine zweite Hubstellung (7) mit einem zweiten Abstand (b) zwischen der Ankerplatte (4) und dem Magnetkern (3) besitzt, wobei der erste Abstand (a) in der ersten Hubstellung (6) größer ist als der zweite Abstand (b) in der zweiten Hubstellung (7), wobei der Durchfluss des elektromagnetischen Ventils (1) in einer der beiden Hubstellungen (6, 7) geöffnet und in der anderen Hubstellung (6, 7) gesperrt ist, wobei die Ankerplatte (4) einen Hubweg (c) von der ersten Hubstellung (6) zur zweiten Hubstellung (7) aufweist, wobei das elektromagnetische Ventil (1) ein erstes Federelement (9) und ein zweites Federelement (10) umfasst, wobei das erste Federelement (9) auf die Ankerplatte (4) über den gesamten Hubweg (c) wirkt,
**dadurch gekennzeichnet, dass** das zweite Federelement (10) ab einer Zwischenposition (8) der Ankerplatte (4), welche zwischen der ersten Hubstellung (6) und der zweiten Hubstellung (7) liegt, bis zur zweiten Hubstellung (7) zusätzlich zum ersten Federelement (9) auf die Ankerplatte (4) wirkt.

2. Elektromagnetisches Ventil nach Anspruch 1,
**dadurch gekennzeichnet, dass** das elektromagnetische Ventil (1) in die erste Hubstellung (6) oder in die zweite Hubstellung (7) monostabil schaltbar ist.

3. Elektromagnetisches Ventil nach Anspruch 1 oder 2,
**dadurch gekennzeichnet, dass** in der ersten Hubstellung (6) ein Eingriffsabstand (e) zwischen dem Ventilkörper (5) und dem zweiten Federelement (10) zwischen 20% bis 80%, vorzugsweise 30% bis 60%, insbesondere 40% des gesamten Hubwegs (c) entspricht.

4. Elektromagnetisches Ventil nach einem der Ansprüche 1 bis 3,
**dadurch gekennzeichnet, dass** das erste Federelement (9) in der ersten Hubstellung (6) vorgespannt ist.

5. Elektromagnetisches Ventil nach einem der Ansprüche 1 bis 4,
**dadurch gekennzeichnet, dass** das erste Federelement (9) in der zweiten Hubstellung (7) eine größere Federkraft auf die Ankerplatte (4) bewirkt als in der ersten Hubstellung (6).

6. Elektromagnetisches Ventil nach einem der Ansprüche 1 bis 5,
**dadurch gekennzeichnet, dass** das zweite Federelement (10) in der zweiten Hubstellung (7) eine größere Federkraft auf die Ankerplatte (4) bewirkt als in der Zwischenposition (8).

7. Elektromagnetisches Ventil nach einem der Ansprüche 1 bis 6,
**dadurch gekennzeichnet, dass** das erste Federelement (9) eine erste Federkonstante und das zweite Federelement (10) eine zweite Federkonstante aufweisen, wobei die zweite Federkonstante höher ist als die erste Federkonstante.

8. Elektromagnetisches Ventil nach einem der Ansprüche 1 bis 7,
**dadurch gekennzeichnet, dass** die erste Federkonstante linear ist.

9. Elektromagnetisches Ventil nach einem der Ansprüche 1 bis 8,
**dadurch gekennzeichnet, dass** die zweite Federkonstante linear ist.

10. Elektromagnetisches Ventil nach einem der Ansprüche 1 bis 9,
**dadurch gekennzeichnet, dass** das zweite Federelement (10) in Zwischenposition (8) der Ankerplatte (4) den Ventilköper (5) kontaktiert.

11. Elektromagnetisches Ventil nach einem der Ansprüche 1 bis 10,
**dadurch gekennzeichnet, dass** in bestromtem Zustand des elektromagnetischen Ventils (1) in jeder Stellung der Ankerplatte (4) zum Magnetkern (3) eine auf die Ankerplatte (4) wirkende Gesamtfederkraft des ersten Federelementes (9) und des zweiten Federelementes (10) geringer ist als eine auf die Ankerplatte (4) wirkende Magnetkraft des elektromagnetischen Ventils (1).

12. Elektromagnetisches Ventil nach Anspruch 11,
**dadurch gekennzeichnet, dass** in bestromtem Zustand des elektromagnetischen Ventils (1) in jeder Stellung der Ankerplatte (4) zum Magnetkern (3) die Gesamtfederkraft höchstens 90%, vorzugsweise 65% der Magnetkraft entspricht.

13. Verfahren zum Betrieb eines elektromagnetischen Ventils
mit einem elektromagnetischen Ventil nach einem der Ansprüche 1 bis 12, wobei bei Bestromung des elektromagnetischen Ventils (1) die Ankerplatte (4) von der ersten Hubstellung (6) in die zweite Hubstellung (7) bewegt wird, wobei von der ersten Hubstellung (6) bis zur Zwischenposition (8) lediglich das erste Federelement (11) auf die Ankerplatte (4) wirkt,
und wobei von der Zwischenposition (8) bis zur zweiten Hubstellung (7) das erste Federelement (9) und das zweite Federelement (10) zusätzlich auf die Ankerplatte (4) wirken.
